# EUROPÄISCHE PATENTSCHRIFT

(11) **EP 1 304 527 B1**
(45) Veröffentlichungstag und Bekanntmachung des Hinweises auf die Patenterteilung: **15.12.2004**
(21) Anmeldenummer: 01124871.3
(22) Anmeldetag: 18.10.2001
(51) Int. Cl.: F23N 5/12, F23N 1/08, G05D 23/19

(54) **Verfahren zur Regelung eines Boilers**
Method for controlling a boiler
Méthode de régulation d'un chauffe-eau

(43) Veröffentlichungstag der Anmeldung: 23.04.2003
(73) Patentinhaber: HONEYWELL B.V., 1101 EA Amsterdam Z.O. (NL)
(72) Erfinder: Vegter, Derk, Nieuw Amsterdam (NL)
(74) Vertreter: Leson, Thomas Johannes Alois, Dipl.-Ing.

(56) Entgegenhaltungen:
- EP-A- 1 011 037
- DE-C- 10 049 602
- DE-C- 19 539 568
- US-A- 5 899 683
- US-A- 5 924 859

## Beschreibung

Die Erfindung betrifft ein Verfahren zur Regelung eines Boilers gemäß dem Oberbegriff des Anspruchs 1.

Aus EP-A-1 011 037 ist ein Verfahren mit den Merkmalen des Oberbegriffs des Anspruchs 1 bekannt. So offenbart EP-A-1 011 037 ein Verfahren zur Regelung eines eine Brenner-Einrichtung und eine Wärmetauscher-Einrichtung umfassenden Boilers, wobei ein gemessener Istwert der Wärmetauscher-Einrichtung mit einem entsprechenden Sollwert verrechnet und anschließend einer ersten Regeleinrichtung zugeführt wird, die hieraus ein Stellsignal für die Brenner-Einrichtung errechnet. Gemäß EP-A-1 011 037 wird dieses Stellsignal mit einem gemessenen Istwert der Brenner-Einrichtung verrechnet und anschließend einer zweiten Regeleinrichtung zugeführt wird, die hieraus ein modifiziertes Stellsignal für die Brenner-Einrichtung errechnet. Gemäß EP-A-011 037 wird der Istwert der Wärmetauscher-Einrichtung mit einem Temperatur-Sensor gemessen, der Istwert der Brenner-Einrichtung mit einem Ionisations-Sensor.

Nach dem Stand der Technik müssen für eine Inertialisierung bzw. Kalibrierung der Brennerregelung sowohl die minimale als auch die maximale Brennerlast angefahren werden, um eine Inertialisierung bzw. Kalibrierung für die Brennerregelung durchzuführen.

Der vorliegenden Erfindung liegt das Problem zu Grunde, ein einfacheres Verfahren zur Regelung eines Boilers zu schaffen.

Dieses Problem wird durch ein Verfahren mit den Merkmalen des Anspruchs 1 gelöst.

Weitere vorteilhafte Ausgestaltungen der Erfindung ergeben sich aus den Untcransprüchen und der Beschreibung. Nachfolgend wird ein bevorzugtes Ausführungsbeispiel der Erfindung anhand der Zeichnung näher erläutert. In der Zeichnung zeigt:

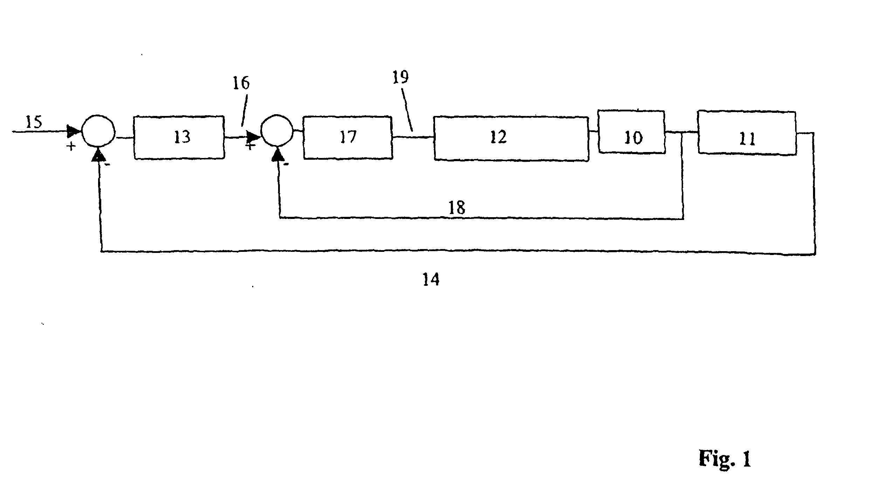

Fig. 1 ein Blockschaltbild einer Vorrichtung zur Regelung eines Boilers nach dem Stand der Technik.

Die in Fig. 1 dargestellte Vorrichtungen dient der Regelung eines Boilers. Diese Vorrichtung ist aus EP-A-1 011 037 bekannt. Auf EP-A-1 011 037 wird hier ausdrücklich Bezug genommen. Der Offenbarungsgehalt von EP-A-1 011 037 soll Bestandteil dieser Anmeldung sein.

Die in Fig. 1 gezeigte Vorrichtung weist einen Boiler bestehend aus einer Brenner-Einrichtung 10, nämlich einem atmosphärischen Gasbrenner oder einem Gebläseunterstützten Gasbrenner, und einer Wärmetauscher-Einrichtung 11 auf. Der Brenner-Einrichtung bzw. dem atmosphärischen Gasbrenner 10 ist ein Brennstoff-Ventil 12, nämlich ein Gasventil, zugeordnet. Des weiteren verfügt die Vorrichtung über eine erste Regeleinrichtung 13, die zusammen mit den obigen Elementen eine erste Regelschleife bildet. Ein gemessener Istwert 14 der Wärmetauscher-Einrichtung 11 wird mit einem entsprechenden Sollwert 15 verrechnet und anschließend der ersten Regeleinrichtung 13 zugeführt wird. Bei dem Istwert 14 handelt es sich um einen mit Hilfe eines nicht dargestellten Temperatur-Sensors gemessenen Ist-Temperaturwert. Beim Sollwert 15 handelt es sich also um eine Soll-Temperatur. Istwert 14 und Sollwert 15 werden gemäß Fig. 1 voneinander subtrahiert. Diese Differenz wird der ersten Regeleinrichtung 13 zugeführt, die hieraus ein Stellsignal 16 für die Brenner-Einrichtung 10 errechnet. Zusätzlich verfügt Vorrichtung gemäß Fig. 1 über eine in eine zweite Regelschleife integrierte zweite Regeleinrichtung 17. Die zweite Regeleinrichtung 17 ist derart in die erste Regelschleife verschaltet, daß die Eingangsgrößen der zweiten Regeleinrichtung 17 die Ausgangsgröße 16 der ersten Regeleinrichtung 13 und ein Istwert 18 der Brenner-Einrichtung bzw. des Gasbrenners 10 sind. Die Ausgangsgröße der zweiten Regeleinrichtung 17 wirkt auf den Eingang des Brennstoff-Ventils 12 ein, und bildet so ein modifiziertes Stellsignal 19 für die Brenner-Einrichtung 10 bzw. für das der Brenner-Einrichtung 10 zugeordnete Brennstoff-Ventil 12. Bei dem Istwert 18 der Brenner-Einrichtung bzw. des Gasbrenners 10 handelt es sich um ein mit Hilfe eines nicht dargestellten Ionisations-Sensors gemessenes Ionisationssignal. Das Ionisationssignal gibt Aufschluß über die Qualität der Verbrennung innerhalb des Gasbrenners 10 sowie über die dem Gasbrenner 10 zugeführte Gasmenge. Bei atmosphärischen Gasbrennern besteht eine in etwa lineare Beziehung zwischen dem Ionisationsstrom und der Brennerleistung, der vom Gasstrom abhängig ist. Das Regelungsergebnis negativ beeinflussenden Nichtlinearitäten werden eliminiert. Der Istwert 18 wird mit der Ausgangsgröße 16 der ersten Regeleinrichtung 13 verrechnet, wobei diese beiden Signale voneinander subtrahiert werden. Die sich ergebende Differenz wird der zweiten Regeleinrichtung 17 als Eingangsgröße zugeführt. Die zweite Regeleinrichtung 17 bestimmt hieraus das modifizierte Stellsignal 19.

Nach dem Stand der Technik müssen für eine Inertialisierung bzw. Kalibrierung der Brennerregelung sowohl die minimale als auch die maximale Brennerlast angefahren werden, um eine Inertialisierung für die Brennerregelung durchzuführen.

Erfindungsgemäß wird lediglich die maximale Brennerlast angefahren und bei der maximalen Brennerlast wird das Ionisationssignal ermittelt. Mit anderen Worten wird bei maximalen Gasdruck das Ionisationssignal ermittelt. In Verbindung mit der in etwa linearen Beziehung zwischen dem Ionisationsstrom und der Brennerleistung kann dann eine genaue Regelung abhängig von dieser Kalibrierung erfolgen.

### Bezugszeichenliste:

- 10: Brenner-Einrichtung
- 11: Wärmetauscher-Einrichtung
- 12: Brennstoff-Ventil
- 13: erste Regeleinrichtung
- 14: Istwert
- 15: Sollwert
- 16: Stellsignal
- 17: zweite Regeleinrichtung
- 18: Istwert
- 19: Stellsignal

## Patentansprüche

1. Verfahren zur Regelung eines eine Brenner-Einrichtung (10) und eine Wärmetauscher-Einrichtung (11) umfassenden Boilers, wobei ein gemessener Istwert (14) der Wärmetauscher-Einrichtung (11) mit einem entsprechenden Sollwert (15) verrechnet und anschließend einer ersten Regeleinrichtung (13) zugeführt wird, die hieraus ein Stellsignal (16) für die Brenner-Einrichtung (10) errechnet, und wobei dieses Stellsignal (16) mit einem gemessenen Istwert (18) der Brenner-Einrichtung (10) verrechnet und anschließend einer zweiten Regeleinrichtung (17) zugeführt wird, die hieraus ein modifiziertes Stellsignal (19) für die Brenner-Einrichtung (10) errechnet, **dadurch gekennzeichnet, daß** zur Inertialisierung bzw. Kalibrierung der Regelung ausschließlich die maximale Brennerlast angefahren und bei der maximalen Brennerlast ein Ionisationssignal ermittelt wird.

2. Verfahren nach Anspruch 1, **dadurch gekennzeichnet, daß** abhängig von dem bei maximaler Brennerlast ermittelten Ionisationssignal und anhängig von der in etwa linearen Beziehung zwischen dem Ionisationssignal und der Brennerleistung die Regelung erfolgt.

## Claims

1. Method for controlling a boiler comprising a burner unit (10) and a heat exchanger unit (11), wherein a measured actual value (14) of the heat exchanger unit (11) is offset against a corresponding set value (15) and then fed to a first control unit (13) which calculates therefrom a control signal (16) for the burner unit (10), and wherein this control signal (16) is offset against a measured actual value (18) of the burner unit (10) and then fed to a second control unit (17) which calculates therefrom a modified control signal (19) for the burner unit (10), **characterized in that** for the inertialization and/or calibration of the control, the burner is run at maximum burner load only, and an ionization signal is obtained at maximum burner load.

2. Method according to Claim 1, **characterized in that** the boiler is controlled as a function of the ionization signal obtained at maximum burner load and the approximately linear relation between ionization signal and burner output.

## Revendications

1. Procédé pour la régulation d'un chauffe-eau comprenant un dispositif formant brûleur (10) et un dispositif formant échangeur de chaleur (11), selon lequel une valeur réelle mesurée (14) du dispositif formant échangeur de chaleur (11) est comparée à une valeur théorique appropriée (15) puis est transmise à un premier régulateur (13) qui calcule à partir de là un signal de réglage (16) pour le dispositif formant brûleur (10), et ce signal de réglage (16) est comparé à une valeur réelle mesurée (18) du dispositif formant brûleur (10) puis est transmise à un second régulateur (17) qui calcule à partir de là un signal de réglage modifié (19) pour le dispositif formant brûleur (10), **caractérisé en ce que** pour l'initialisation ou le calibrage de la régulation, seule la charge de brûleur maximale est démarrée, et un signal d'ionisation est déterminé en présence de la charge de brûleur maximale.

2. Procédé selon la revendication 1, **caractérisé en ce que** la régulation se fait en fonction du signal d'ionisation déterminé en présence d'une charge de brûleur maximale et en fonction du rapport à peu près linéaire entre le signal d'ionisation et la puissance de brûleur.
